(19) Europäisches Patentamt / European Patent Office / Office européen des brevets

(11) **EP 3 850 395 B1**

(12) **EUROPEAN PATENT SPECIFICATION**

(45) Date of publication and mention
of the grant of the patent:
**29.04.2026 Bulletin 2026/18**

(21) Application number: **19860983.6**

(22) Date of filing: **10.09.2019**

(51) International Patent Classification (IPC):
**G01S 13/48** (2006.01)    **G01S 13/931** (2020.01)
**G01S 13/75** (2006.01)    **G01S 13/76** (2006.01)
**G01S 13/86** (2006.01)    **G08G 1/16** (2006.01)
**G01S 15/931** (2020.01)

(52) Cooperative Patent Classification (CPC):
**G01S 13/931; G01S 13/75; G01S 13/765;
G08G 1/163; G08G 1/166;** G01S 13/862;
G01S 13/865; G01S 13/867; G01S 15/931;
G01S 2013/9315; G01S 2013/93185;
G01S 2013/93271; G01S 2013/93272;
G01S 2013/93274; G01S 2013/9329

(86) International application number:
**PCT/IB2019/000994**

(87) International publication number:
**WO 2020/053650 (19.03.2020 Gazette 2020/12)**

(54) **SYSTEMS AND METHODS FOR IMPROVING THE DETECTION OF LOW-ELECTROMAGNETIC-PROFILE OBJECTS BY VEHICLES**

SYSTEME UND VERFAHREN ZUR VERBESSERUNG DER DETEKTION VON OBJEKTEN MIT NIEDRIGEM ELEKTROMAGNETISCHEM PROFIL DURCH FAHRZEUGE

SYSTÈMES ET PROCÉDÉS D'AMÉLIORATION DE LA DÉTECTION, PAR DES VÉHICULES, D'OBJETS À PROFIL ÉLECTROMAGNÉTIQUE FAIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2018 US 201862728884 P
30.10.2018 US 201862752373 P
30.07.2019 US 201916526111**

(43) Date of publication of application:
**21.07.2021 Bulletin 2021/29**

(73) Proprietor: **Beiski, Ben Zion
5502707 Kiryat Ono (IL)**

(72) Inventor: **Beiski, Ben Zion
5502707 Kiryat Ono (IL)**

(74) Representative: **Danubia Patent & Law Office LLC
Bajcsy-Zsilinszky út 16
1051 Budapest (HU)**

(56) References cited:
**WO-A1-2015/172770     US-A1- 2002 169 533
US-A1- 2010 052 945     US-A1- 2010 164 710
US-A1- 2012 001 735     US-A1- 2015 130 651**

**Description**

BACKGROUND OF THE INVENTION

The present invention relates to navigation systems for autonomous vehicles and, more particularly, to a system for improving the capabilities of partially or fully autonomous vehicles by adding dedicated RFID tags and/or a radar reflector to low-electromagnetic-profile objects that the vehicle may encounter while trying to navigate using only its own instrumentation.

A vehicle trying to navigate using its sensors may encounter numerous low-electromagnetic-profile objects such as a bicycle, motorcycle, livestock animals, pets, horses, children, road-side posts, stop-sign, traffic light, policeman, round-about, and the like. Undetected objects and/or misidentification of those object can hamper the vehicle's navigation system and cause very serious safety issues.

Modern vehicles are controlled partially or fully by a control system that gets information of surrounding objects by an array of sensors, e.g., optical, visual, RF-based, etc. Future transportation technologies will rely even more significantly on such sensors to detect the surrounding objects and guide the vehicle safely. However, the information sensed by the vehicle's sensors can be misleading; for example, an object like a soda can produce a radar image far out of proportion to its size, while a plastic road-side post or a child can produce a radar image much smaller than it is. Moreover, relying on information that is received from external networks (cellular, Wi-Fi, Bluetooth, BLE, proprietary, VANET and the like) can cause serious safety issues due to communication speed, accuracy and reliability issues, etc.

Therefore, increasing automation levels requires a system that can accurately sense and analyze complex scenarios so as to correctly respond to multiple potential hazards in real-time. Moreover, fast-moving vehicles require fast, real-time and accurate information.

One of the most prominent issues that autonomous (or semi-autonomous) vehicle technology faces is the inability to detect and react to cyclists (as an example of low-electromagnetic-profile objects) in biking lanes or who share the road with vehicles. Though, cyclists are not the only objects that the vehicles' sensors find difficult to detect. A vehicle encounters many other objects with low-electromagnetic profile; children, motorcycles, pets, horses, pigs, bulls, guardrails (specifically non-metal), pedestrians, traffic-light, road-side signs, roundabout, etc. (and any combination thereof), whereby such low-electromagnetic profile objects are often not detected, or their detection is misidentified - i.e., their perceived electromagnetic profile is different than what is identified. Even visual sensors like cameras or IR sensors can often be misleading when sensing children, for example.

A vehicle trying to navigate by relying solely on information coming from its sensors must have accurate information on all surrounding objects based in at least in part on such object's electromagnetic profile, or more specifically its Radar Cross Section (RCS). This radar reflection/emission is also known as a "radar fingerprint" or "radar signature". Again, such navigation cannot be flawlessly achieved, however, because some objects have a low electromagnetic profile. On the other hand, if the surrounding objects could identify their "nature" (i.e., who am I? How big I am? my status, etc.) in addition to their accurate, real-time position, the overall effectiveness and safety of the vehicle could be significantly improved. Especially in an urban environment where the density and diversity of objects are very challenging, optimal performance requires reliable, accurate and fast detection methods of all the objects, including those with low-electromagnetic profiles.

Nowadays, five major classes of vehicular sensors provide the lion's share of environment sensory data for vehicle control. Those sensors include:

(1) Short, medium and long-range radars;
(2) Light Detection and Ranging (hereafter LIDAR);
(3) Image sensors (mainly cameras in the infrared and visual bands);
(4) Ultrasound; and
(5) Cameras, and the like and any combination thereof.

Radar-based systems that are typically employed in automotive active safety systems can be subdivided into three major classes:

(i) Short-range radar (SRR) for collision proximity warning and safety, and to support limited parking assist features;
(ii) Medium-range radar (MRR) to watch the corners of the vehicle, perform blind spot detection, observe other-vehicle lane crossover and avoid side/corner collisions; and
(iii) Long-range radar (LRR) for forward-looking sensors, adaptive cruise control (ACC) and early collision detection functions.

Failing to detect the surrounding objects affects the decisions the vehicle control unit makes, and the consequences could be dire-particularly if the car is relying on that information to navigate and avoid crashing into them. As an example, a small child standing next to a vehicle can become "invisible" to a radar receiver. Moreover, the growing use of; composite material like carbon-fiber in the structures like frames of bicycles and motorcycles, in addition to the prevalence of plastic-based parts (in roadside signs and vehicles), decreases those objects electromagnetic profile even more. This is because radar-based sensors rely on the reflected, electromagnetic radiation from the object to be detected. The effectiveness of any radar-based system depends on the reflected, electromagnetic radiation. Low-reflected, electromagnetic radiation impairs the effectiveness of any radar-based sensor significantly. This phenomenon is used (but to achieve the opposite effect) by stealth aircraft which are designed to avoid detection using a variety of technologies that reduce reflection/emission of radars.

A variety of methods in use by vehicle radar systems; Long Range Radar (LRR) systems operate in the 77 GHz frequency band (76 - 81 GHz), the broadband Frequency Modulated Continuous Wave (FMCW) that combines high resolution in range and depth perception, with the detection of objects in a small radar cross-section, automatic emergency braking system (AEBS) and adaptive cruise control (ACC).

Bicycles, as an example, pose a complex detection problem because they are relatively small, fast and heterogenous, unlike a car which is a big block of stuff. A bicycle has significantly less mass (mainly metal) and usually has multiple variations in appearance: i.e., there are more shapes, colors, material compositions, and stuff attached to bicycles. Tests have shown that today's systems spot only 74 percent of bikes vs. 88 percent of the vehicle. Current technology for vehicle control (partially or full-self-driving cars) thus faces an inability to detect and react to cyclists in biking lanes or who share the road with vehicles. Bicycles are much less predictable, nimbler than cars because it's easier for them to make sudden turns or jump out of nowhere. A 2017 study by the IEEE Spectrum found that out of all forms of transportation that autonomous cars interact with, self-driving car technology has the most difficulty detecting bicycles.

As can be seen, there is a need for a system for improving the capabilities of partially or fully autonomous vehicles by adding dedicated RFID tags and/or a radar reflector to low-electromagnetic-profile objects that the vehicle may encounter while trying to navigate using only its own instrumentation. The system and methods of the present invention offer a very low-cost solution through incorporating a reflector and/or RFID to the bicycle, as an example of an object with a low electromagnetic profile. The reflector bounces back the radar signals of the vehicle and the RFID respond to the vehicle RFID reader with information on its identification; "I'm a bicycle", "my correct position is...", "my current speed is...", "my direction is...", and the like.

While today, an autonomous (semi or full) vehicle relies only on its sensors and their processing power at their control unit for road objects detection and identification, the disclosed systems and methods of the present invention give real-time and accurate information from low-electromagnetic-profile objects it may encounter, in a very reliable manner and at an affordable price. The information is added to the vehicle's existing control system inputs and improves the accuracy and safety of the vehicle's navigation mainly for semi or fully autonomous vehicles.

The document US 2002/169533 A1 discloses a method of deploying responsive devices in a vehicle in anticipation of a collision with an object. In the method a sensor, such as a radar sensor is used onboard a vehicle to identify an imminent collision between the vehicle and an object. An elicitation signal is directed and transmitted to the object from the vehicle, and then a response signal is received onboard the vehicle from the object providing information positively identifying the object. The positive identification information is used to predict a severity level of said imminent collision. At least one responsive device onboard the vehicle is selectively deployed according to said predicted severity level.

The system and method of the present invention can be small in size, low cost, weatherproof, immune to cyber-attacks, powerless (passive) and consume very limited power that is needed in active or continuously programmable RFID versions. Its power, if needed, can be supplied by a battery and/or a solar cells panel, wind turbine, or the like, thereby enabling implementation of this technology in remote areas without a connection to the electrical grid. Due to its low cost it is very affordable even for low-cost objects (such as basic road-side plastic warning sign). The system of the present invention (the passive version RFID) is immune to any hacking attacks as its data can't be modified online, unlike many IoT (Internet of Things) devices. Moreover, it is very simple to implement and install and requires very low maintenance if any.

Increasing an object's electromagnetic signature and/or its identification can be subdivided into two basic methods; passive and active. A passive method uses the energy coming from the transmitting device only. In the active devices, the reflected signal is enhanced (amplified), or triggering action that is received by the transmitting device.

SUMMARY OF THE INVENTION

According to the invention defined in claim 1, a method for improving a vehicular navigation control system includes the following: providing a vehicle having a navigation control system and a radar; connecting an RFID reader to the vehicle and operatively associated to said navigation control system; and attaching one or more reflectors to at least one object having a low radar cross-section, wherein each reflector increases the radar cross-section; coupling one or more RFID tag to each object, wherein each RFID tag retrievably stores an identification data comprising a nature of said object; and said nature being irrespective of a position of said object, wherein the RFID reader is configured to interrogate every RFID tag within an operable range so that the RFID tag discloses the identification data.

According to an embodiment, a method of creating a vehicular ad-hoc network includes the above-mentioned method and further comprises: providing a plurality of vehicles incorporating the above-mentioned method; and each navigation control system configured to share the identification data of each object with each vehicle beyond the operable range; a traffic module coupled to each navigation control system, wherein the traffic module comprises a status of traffic regulation in the operable range, and wherein the traffic module is coupled to the identification data of each object.

These and other features, aspects and advantages of the present invention will become better understood with reference to the following drawings, description and claims.

BRIEF DESCRIPTION OF THE DRAWINGS

Figure 1 - illustrates an example of how the system of the present invention is mounted on a bicycle and interacts with a vehicle on the road.

Figure 2 - illustrates in block diagram form a general structure of the system, only the part mounted on the low electromagnetic profile object part, of the present invention in its passive RFID version.

Figure 3 - illustrates in block diagram form a general structure of the system, only the part mounted on the low electromagnetic profile object part of the present invention in its active RFID version.

Figure 4 - illustrates in block diagram form a general structure of the system, only the part mounted on the low electromagnetic profile object part, of the present invention in its continuously-programmable RFID version.

Figure 5 - illustrates in block diagram form a general structure of the frequency allocation bands including the frequency bands allocated for the automotive industry.

Figure 6 - illustrates in diagram form a general structure of typical-vehicle sensors setup and functionality.

Figure 7- illustrates in diagram form a general structure of a typical sensors' setup in a vehicle.

Figure 8 - illustrates in diagram form a general concept and functionality of a typical corner-reflector.

Figure 9 - illustrates in diagram form a general structure of a typical multidirectional corner reflector with an RFID tag placed in one location.

Figure 9a - illustrates in diagram form a general structure of a typical multi-directional corner reflector with multi RFIDs (tags or antennas only) each one placed in a different direction.

Figure 10 - illustrates an example to the improvement in the radar cross-section reflection achieved by a corner reflector. It shows the radiation pattern of the triangular trihedral corner reflector in the azimuth and elevation planes.

Figure 11 - illustrates in diagram form a general structure of a typical setup of the system of the present invention on a bicycle.

Figure 12 - illustrates in diagram form a general structure of a typical RFID system and an additional embodiment of connecting a GPS information (fixed or alternating) to the RFID tag.

Figure 13 - illustrates in diagram form a general structure of a typical setup of the system of the present invention installed on examples of objects a vehicle may encounter such as; a pig, a bull/cow, a sheep, a doc (a pet), a horse, a child, road signs (of all kinds), a scooter, a policeman, a traffic light, and the like - all as examples and in any combination thereof. The black dots show the optional placement of the reflector and/or RFID tag in those sample objects.

Figure 14 - illustrates in diagram form an example of the system of the present invention and how it can be integrated into a traffic light at a 4-way junction.

Figure 15 - illustrates in diagram form a general structure of a typical setup of the system of the present invention installed in a vehicle control system.

DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Broadly, an embodiment of the present invention provides a system and methods for improving the performances and safety of vehicles' control systems by increasing the detectability and the information of low-electromagnetic-profile objects, such as road signs, children, and the like, by the vehicle's control-system sensors. The disclosed systems and methods of the present invention includes radar reflectors and RFID tags (passive, active or continuously-programmable) attached to low-electromagnetic-profile objects on one end, and radars, cameras and RFID readers (also known as an interrogator) added to the vehicle and connected to its control system on the other end.

The system includes radar reflectors and RFID tags attached to low-electromagnetic-profile objects and storing in their memory the relevant information about the object. The vehicle is equipped with radars, cameras and one or more RFID interrogators. The low-electromagnetic-profile objects reflect more effectively the radar signals and respond to interrogation by an RFID reader, providing, in real-time, vital information about the characteristics of the low-electromagnetic-profile object, like, nature, position, status, and the like, to the interrogating vehicle control system.

It should be understood that the definition of the following words and terms having the following meanings: The terms "about" and "essentially" mean $\pm 10$ percent.

The terms "a" or "an," as used herein, are defined as one or as more than one. The term "plurality", as used herein, is defined as two or as more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

References throughout this document to "one embodiment", "certain embodiments", and "an embodiment" or similar terms means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner in one or more embodiments without limitation.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

The drawings featured in the figures are for the purpose of illustrating certain convenient embodiments of the present invention, and are not to be considered as limitation thereto. The term "means" preceding a present participle of an operation indicates a desired function for which there is one or more embodiments, (i.e., one or more methods, devices, or apparatuses for achieving the desired function) and that one skilled in the art could select from these or their equivalent in view of the disclosure herein, and use of the term "means" is not intended to be limiting.

### Passive devices - Radar reflectors

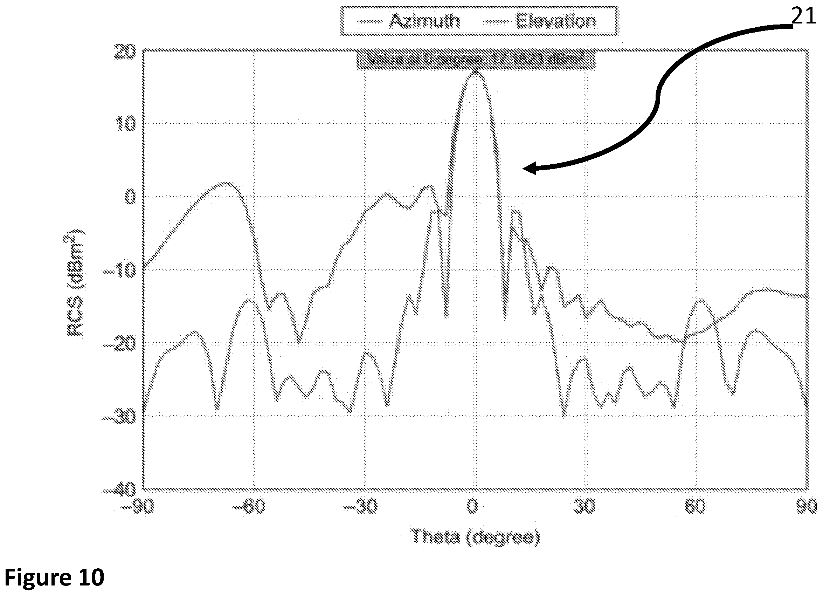

A radar reflector is aimed at effectively reflecting incoming radar electromagnetic signals. An example of a very effective passive reflector is the light reflector used in multiple devices, such as reflective safety vests, road-side posts, reflective safety warning conspicuity tape (typically in yellow or orange color), running shoes, and many more. Radar reflectors function in a very similar manner to optical reflectors, that can be found in safety vests, road-side reflectors, bicycle, and the like, but aims for different wavelengths (i.e., not in the visible band but in the RF band). An example of such reflector is a "corner reflector" (Dihedral, trihedral or octahedral types). Corner reflectors are used to generate a particularly strong radar echo from objects that would otherwise have only very low effective Radar Cross Section (RCS). Corner reflectors can reflect back stronger radar signal at about 20dB or more than square plate, and even more comparing to objects with non-even, non-metallic surfaces (see figure 10). RCS is the measure of a target's ability to reflect radar signals in the direction of the radar receiver. RCS is computed by the exact solution for the Corner reflector length

- 

$$RCS=(\pi L4)/(3\lambda 2)$$

- RCS in dBsm is computed by taking: $10\log^*(RCS \ [meters2])$

Corner reflectors are typically a metal pyramid **13** with the base removed. Energy enters the pyramid and reflects out in a concentrated beam, hence increasing the radar cross-section in that direction. A multidirectional-corner reflector includes two or three electrically conductive surfaces which are mounted crosswise (at an angle of exactly 90 degrees). Incoming electromagnetic waves are backscattered by multiple reflections accurately in that direction from which they come. Thus, even small objects with small RCS yield a sufficiently strong echo. It is in use very extensively by small vessels and is typically installed on the mast.

The single areas of the corner reflector should be large compared to the radar wavelength. The larger a corner reflector is, the more energy is reflected. It can also be constructed in resonance with the radar wavelength. This will increase the echo signals again. To reduce losses caused by other objects, corner-reflectors are mounted as high as possible.

### RFID - Radio-frequency identification

RFID tags **25** use electromagnetic fields to automatically identify and track the object it is attached to. The tags contain electronically-stored information (which can be a unique identification (ID) or other information such as GPS position, descriptive ID, and the like which can be programmed, stored or changed by a local processor.

The system of the present invention can use at least three types of RFID tags: a) Passive, b) Active and c) Continuously-Programmable RFID with a single or double buffer memory to allow updating the tag's data continuously.

### RFID - Passive

In its passive version, the RFID transmitted signal from the reader (also known as the 'reader') is modulated and reflected back to the reader with the ID information. Passive tags collect energy from a nearby RFID reader's interrogating radio waves.

### RFID - Active Device

RFID - Active tags have a local power source (such as a battery or a solar cell) and have a longer range of operation up to hundreds of meters from the RFID reader. Active RFID is more effective also to fast-moving objects, like an in electronic toll-road. Two different types of active RFID tags are available - transponders and beacons.

**Transponders** - In a system that uses an active transponder tag, the reader (like in the passive systems) will send a signal first, and then the active transponder will send a signal back with the relevant information. Transponder tags are very efficient because they conserve battery life when the tag is out of range of the reader. Active RFID transponders are commonly used in secure access control and in toll booth payment systems.

**Beacons** - In a system that uses an active beacon tag, the tag will not wait to hear the reader's signal. Instead, true to its name, the tag will 'beacon', or send out its specific information every 3 - 5 seconds. Beacon tags are very common in the oil and gas industry, as well as mining and cargo tracking applications. Active tag's beacons can be read hundreds of meters away, but in order to conserve battery life, they may be set to a lower transmit power in order to reach around 100 meters read range.

**Tags antenna types** - the two most common antenna types for an RFID tag is linear- and circular-polarized antennas. An active RFID tag has the advantages of a) longer responds range (usually up to 300 meters) and b) better performances for fast-moving vehicles. Electronic toll road RFIDs typically are active RFID due to the vehicle speed that poses detection difficulties to passive RFIDs.

**Typical RFID frequencies are:**

| RFID FREQUENCY BAND / SPECTRUM ALLOCATIONS | | | | |
|---|---|---|---|---|
| RFID FREQUENCY BAND | FREQUENCY BAND DESCRIPTION | TYPICAL RANGE | | TYPICAL RFID APPLICATIONS |
| 125-134.2 kHz and 140-148.5 kHz | Low frequency | Up to ~ 1/2 metre | These frequencies can be used globally without a license. Often used for vehicle identification. Sometimes referred to as LowFID. | |
| 6.765 - 6.795 MHz | Medium frequency | | Inductive coupling is used on these RFID frequencies. | |
| 13.553 - 13.567 MHz | High Frequency HF Often called 13.56 MHz | Up to ~ 1 metre | These RFID frequencies are typically used for electronic ticketing, contactless payment, access control, garment tracking, etc | |
| 26.957 - 27.283 MHz | Medium frequency | Up to ~ 1 metre | Inductive coupling only, and used for special applications. | |
| 433 MHz | UHF | | These RFID frequencies are used with backscatter coupling, for applications such as remote car keys in Europe | |
| 858 - 930 MHz | Ultra High Frequency UHF | 1 to 10 metres | These RFID frequencies cannot be accessed globally and there are significant restrictions on their use. When they are used, it is often used for asset management, container tracking, baggage tracking, work in progress tracking, etc. and often in conjunction with Wi-Fi systems. For further information on its use see the paragraph below. | |
| 2.400 - 2.483 GHz | SHF | | Backscatter coupling, but only available in USA / Canada | |
| 2.446 - 2.454GHz | SHF | 3 metres upwards | These RFID frequencies are used for long range tracking and with active tags, RFID and AVI (Automatic Vehicle Identification). Backscatter coupling is generally used. | |
| 5.725 - 5.875 GHz | SHF | | Backscatter coupling. Not widely used for RFID. | |

## VANET, V2V - Vehicle-to-Vehicle, V2R - Vehicle-to-Roadside, V2I - Vehicle-to-Infrastructure

The VANET protocol is specifically designed to work in an environment without infrastructure where all the vehicles (nodes) can talk to each other (ad-hoc network) and collaboratively generate information about the traffic conditions existing at that moment in a given environment. The disclosed systems and methods of the present invention can be integrated into VANET where the vehicles share the information they picked from the objects (ID, location, etc.) and share it with the neighboring vehicles, via VANET or other similar data-sharing network. Other elements in the disclosed systems and methods of the present invention and are integrated into the vehicle control system as another input.

The system of the present invention can also be integrated with a vehicle-to-vehicle (V2V), vehicle-to-roadside (V2R), Vehicle to Infrastructure (V2I) by becoming an active node in the network with an additional WiFi/WiMax/Bluetooth and the like, communication channels.

A Vehicular Ad-Hoc Network or VANET is a technology that uses moving vehicles as nodes in a network to create a mobile network. VANET turns every participating vehicle into a wireless router or node, allowing vehicles approximately 100 to 300 meters of each other to connect and, in turn, create a network with a wide range. As vehicles fall out of the signal range and drop out of the network, other vehicles can join in, connecting vehicles to one another so that a mobile Internet is created. VANET is a subgroup of MANET where the nodes refer to vehicles. Since roads restrict the movement of vehicles, traffic regulations create a fixed infrastructure at critical locations which can be leveraged by VANET. The primary goal of VANET is to provide road safety measures where information about the vehicle's current speed, location coordinates are passed with or without the deployment of Infrastructure.

Communication Types

- Vehicle to Vehicle (V2V)
- Vehicle to Infrastructure (V2I)
- Vehicle to Roadside (V2R)

## Vehicle to infrastructure/roadside communication (V2I/V2R)

- ○ Vehicle to Infrastructure provides a solution to longer-range vehicular networks.
- ○ It makes use of pre-existing network infrastructure such as wireless access points (Road-Side Units- RSUs).

◦ Communications between vehicles and RSUs are supported by Vehicle-to-Infrastructure (V2I) protocol and Vehicle-to-Roadside (V2R) protocol.

**Technologies Used**

- Sensor technologies (Infra-red sensing/Video and Camera Image Perception/RADAR/gyro sensor/inertial sensor), process data through mathematical algorithms to come up with a virtual understanding of the vehicle environment
- In-vehicle digital maps and positioning technologies (GPS/Wi-Fi/WiMAX) utilize sensing systems to accurately identify the vehicle position and interpret the environment
- If there is a gridlock/high traffic density detected by a roadside infrastructure, then the roadside system can broadcast the information to all its nodes/vehicles
- In turn, using the DTN capabilities of VANETs, the information can be transmitted to other vehicles heading towards this junction.
- Likewise, it can convey to the incoming vehicles other paths, depending on centralized system co-ordination of finding non-traffic routes at that point of time.

**Dedicated Short Range Communication (DSRC)**

- VANET Active Safety of Passengers and more reliable
- 802.11p Add wireless access to vehicular networks and implements OSI stack
- Wireless Protocol with a Licensed band of 5.9GHz, seven channels, Range of 1000m, Data rate 6 to 27Mbps
- Mainly used in the communication of

    1) Vehicle to Vehicle
    2) Vehicle to Roadside

IEEE 802.11p, a protocol belonging to the IEEE 802.11 family.

Kashif Ali et al. (Reference document no. 1), teaches about installing a Passive-RFID tag to non-intelligent vehicles (non-IVs), in order to assists in their detection by the vehicle's control system, but do not teach about adding a passive RFID tag nor actives RFID to other objects.

A. Vanitha Katherine et al. (reference document No. 2) teaches about using RFID as a means of communication between vehicles (V2V) with VANET concept.

Vehicular Ad-hoc Networks (VANETs) and cooperative collision avoidance (CCA) communication systems for cooperative collision warning and vehicle's navigation, Local Interconnect Network (LIN) and CAN (Controller Area Network), inter-vehicle communication (IVC) protocols. MOST (Media Oriented Systems Transport), FlexRay, and Ethernet have become accepted standards in automotive communications design. Those standards such as Dedicated Short-Range Communication (DSRC) standard are expected to dramatically reduce the number of fatal roadway accidents by providing early warnings and allow safer navigation of the autonomous system.

The aims of the present invention are improving vehicles' control performances by increasing the detectability of low-electromagnetic-profile objects and the information received from those low-electromagnetic-profile objects, by the vehicles' sensors, revealing vital information about the nature, position, speed, etc., of the object, upon a query request from the vehicle, by its radar and an RFID interrogation. Due to its simplicity, high reliability and very low-cost, it can be mounted on every existing or new road element, fixed or moving, providing accurate, reliable, all-weather proof, information to any vehicle and even to multiple vehicles simultaneously. It is integrated into the vehicle's control system enabling it safe and accurate semi or fully automatic navigation.

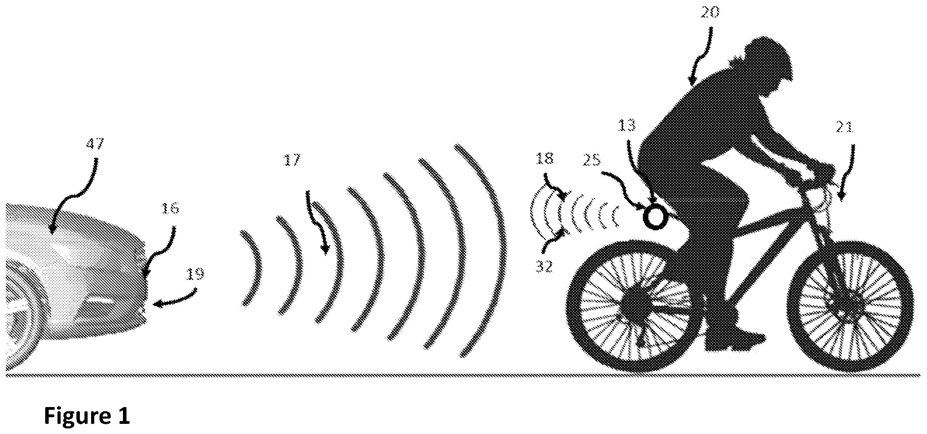

Referring specifically to Figures 1 through 15, Figure 1 illustrates an embodiment of the present invention including a rider **20** on a bicycle **21.** The vehicle **47** and its radar **16** and its RFID reader **19** send electromagnetic signals **17.** The system of the present invention which includes of a reflector **13** and an RFID transponder **25** sends back the electromagnetic signal, which includes of the reflected radar signals **18** and the response of the RFID tag **32** (i.e., with data).

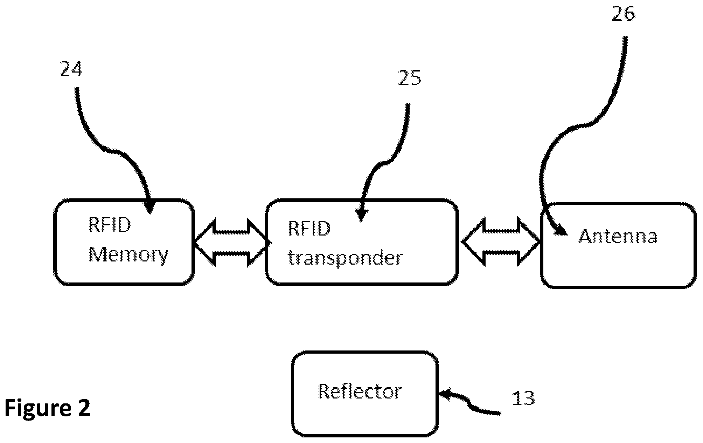

Figure 2 depicts modules in a passive embodiment of the present invention, including of a reflector such as a the road-sign metal plate itself or a corner reflector **13,** and an RFID module which has a memory **24** a transponder circuit **25** and the RFID tag antenna 26.

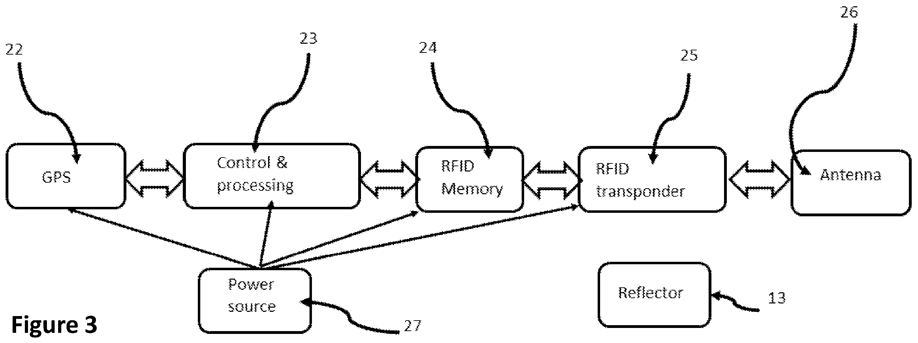

Figure 3 depicts the main modules in the system of the present invention, it's RFID active version. It includes of a reflector such as the sign itself or a corner reflector **13,** and an active RFID module which has a memory **24** a transponder circuit **25** with a powered transmitter and the RFID tag antenna **26.** The GPS data **22** is written on the RFID memory **24.** The whole device is controlled by a control and processing unit **23** (built-in or external), like a microprocessor or ASIC, and gets its power from a power source **27** a battery, a solar panel, a power line and the like.

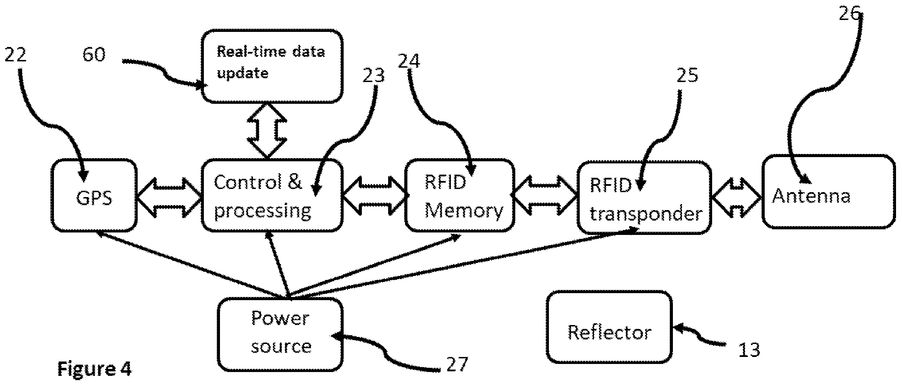

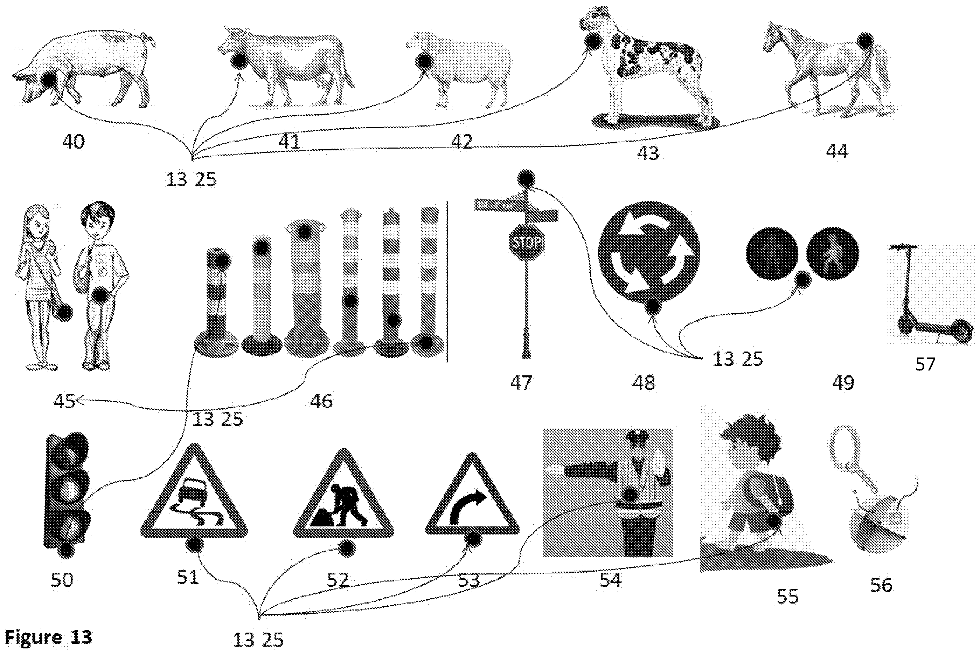

Figure 4 depicts modules in the system of the present invention, the continuously programmable active (or passive) version. It includes of a reflector such as a corner reflector **13,** and an active RFID module which has a memory **24** a transponder circuit with a powered transmitter **25** and the RFID tag antenna **26.** The GPS data **22** is fed into the RFID memory **24** and it can be updated upon every change in location at a fast rate, say, several times every second, so even a very fast-moving object will give its accurate location data within a difference of centimeters. Additional information such as traffic-light **50** (in Figure13) status can also be updating the RFID memory continuously, where the data is coming from the traffic-light computer (as an example) that update in real-time the status of the traffic light. The whole device is controlled by a control and processing unit **23** and gets its power from a power source **27** a battery, a solar panel, a power line and the like.

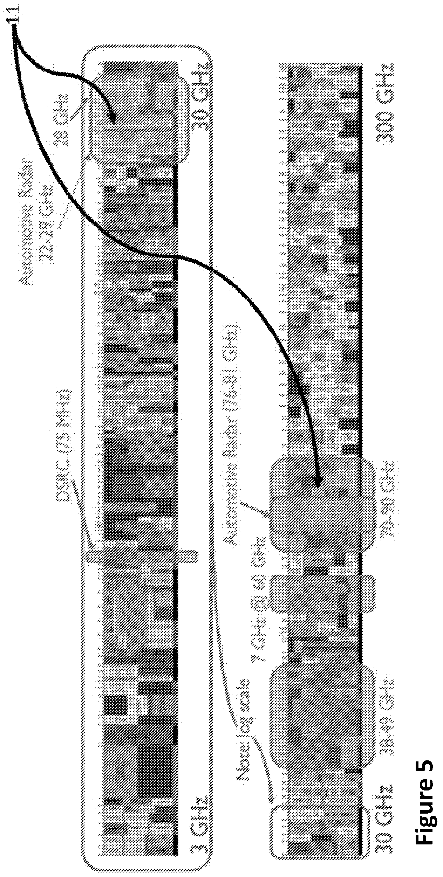

Figure 5 depicts the current frequency allocation for the automotive industry, including for radars in use by vehicles **11.**

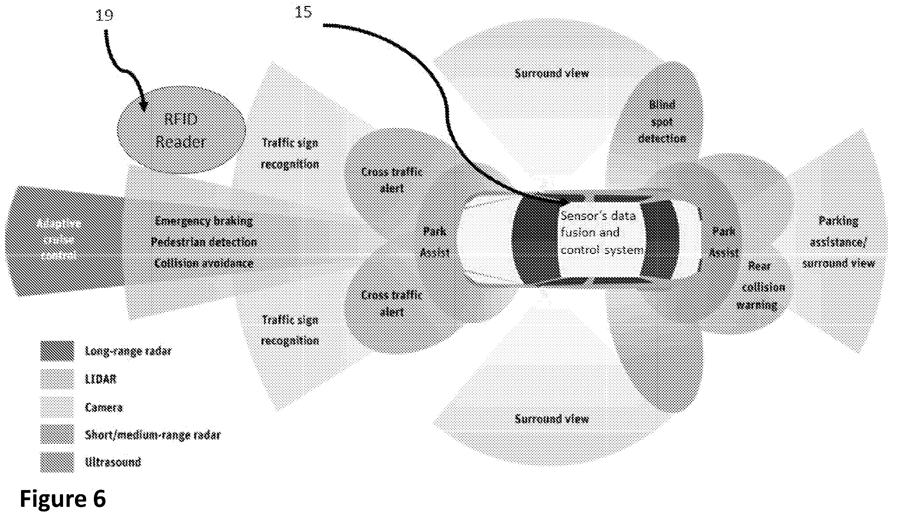

Figure 6 illustrates the type of sensing technologies and devices of an autonomous (a self-driving) vehicle, or a semi-autonomous vehicle uses to navigate its way. All the data from the sensors flows into a sensor's data fusion and control system **15,** which controls the vehicle and its movements. An RFID reader (or interrogator) **19** is added by the present invention, to the array of sensors and its input is an input to the vehicle sensor's data fusion and control system **15** in addition to other multi-sensors inputs.

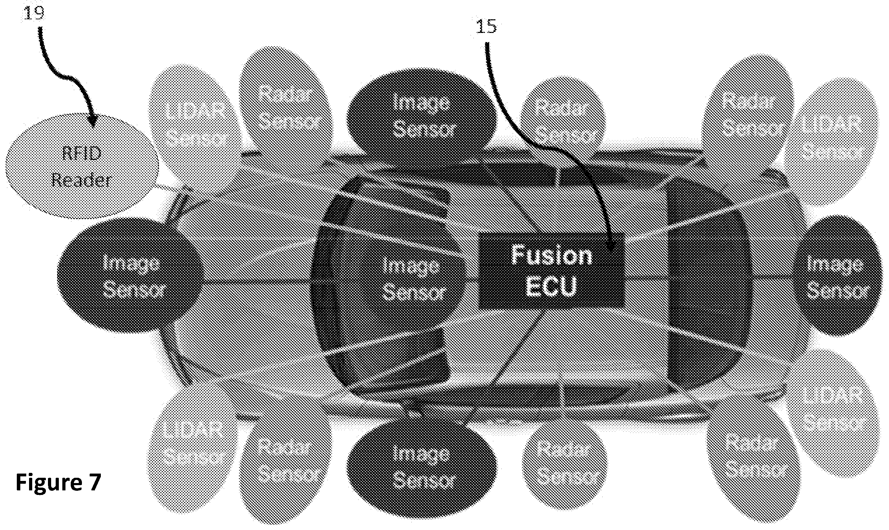

Figure 7 illustrates the type of sensors uses by an autonomous (a self-driving) vehicle or a semi-autonomous vehicle to navigate. All the data from the sensors flows into a sensor's data fusion and control system **15,** which controls the vehicle, also known as Fusion ECU (Electronic control unit) **15.** An RFID reader (or interrogator) **19** is added by the present invention, and its input is added to the multi-sensor's inputs to the vehicle control unit **15.**

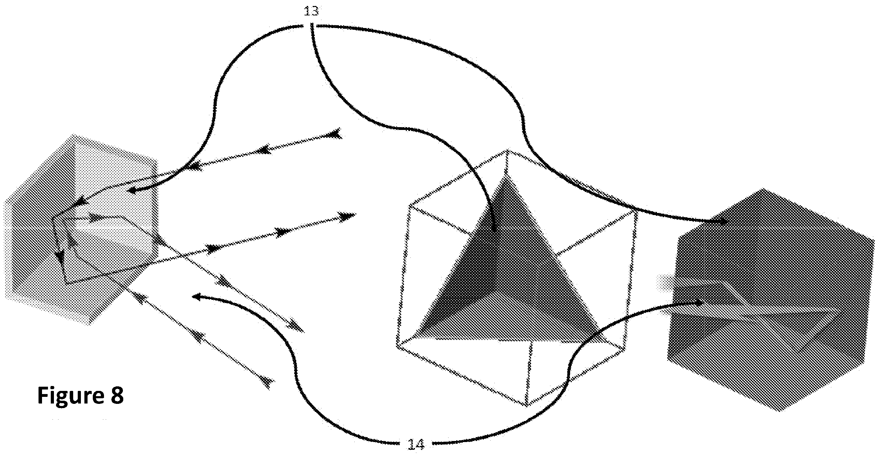

Figure 8 illustrates in diagram form a general concept of a typical corner reflector **13** and the path an electromagnetic wave travels in the reflectors **14.**

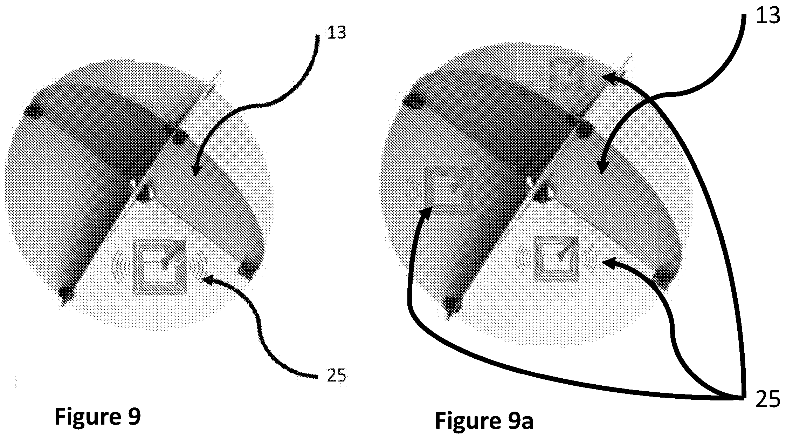

Figure 9 illustrates in diagram form a general concept of a typical corner reflector **13.** As shown, it includes of multiple corner-reflectors that bounce back electromagnetic signals coming from any direction. An additional RFID tag (passive, active or continuously programmable tag) **25** is attached to the reflector **13.** The RFID tag is positioned in the preferred corner. The position of the antenna and RFID tag can be fixed and secured by plastic holders or by filling the corner reflector cavity with silicone, plastic or other non-metal materials that hold the antennas in the preferred position, usually the feed position.

Figure 9a illustrates in diagram form a general concept of a typical multidirectional corner reflector **13.** As shown, it includes of multiple corner-reflectors that bounce back electromagnetic signals coming from any direction. An additional RFID tag (passive, active or continuously, programmable tag) **25** is attached to the reflector **13.** RFID tags (or the antennas only) are positioned in every corner. The position of the antenna and RFID tag can be fixed and secured by plastic holders or by filling the corner reflector cavity with silicone, plastic or other non-metal materials that hold the antennas in the preferred position, usually the feed position.

Figure 10 illustrates an example the improvement in the radar cross-section reflection achieved by a corner reflector. It shows the radiation pattern of the triangular trihedral corner reflector in the azimuth and elevation planes.

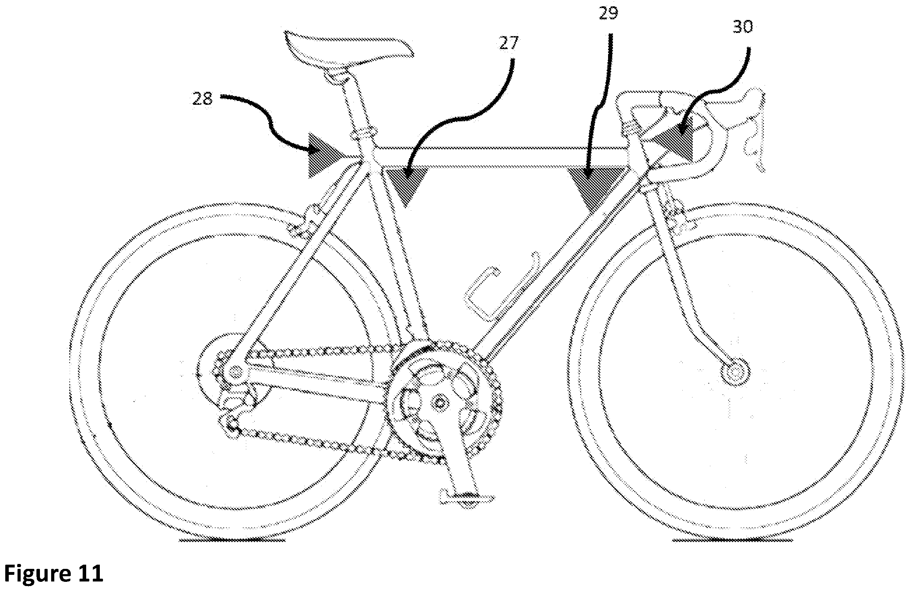

Figure 11 illustrates in diagram form a general structure of a typical setup of the system of the present invention on a bicycle, as an example for a low electromagnetic profile object. The rear reflector of the system of the present invention **28** aimed for reflecting electromagnetic signals coming mainly from the vehicle behind the bicycles, front reflector **30** aimed for reflecting electromagnetic signals coming mainly from the vehicle in front the bicycles. The two side reflectors **27** and **29** aimed for reflecting electromagnetic signals coming mainly from vehicles on the side or from road-side devices and elements. It should be noted that due to the nature of the reflectors those reflectors can also reflect signals that are coming not directly to the reflectors. RFID tags, passive, active or continuously programmable, (not shown) can be also integrated into either reflector.

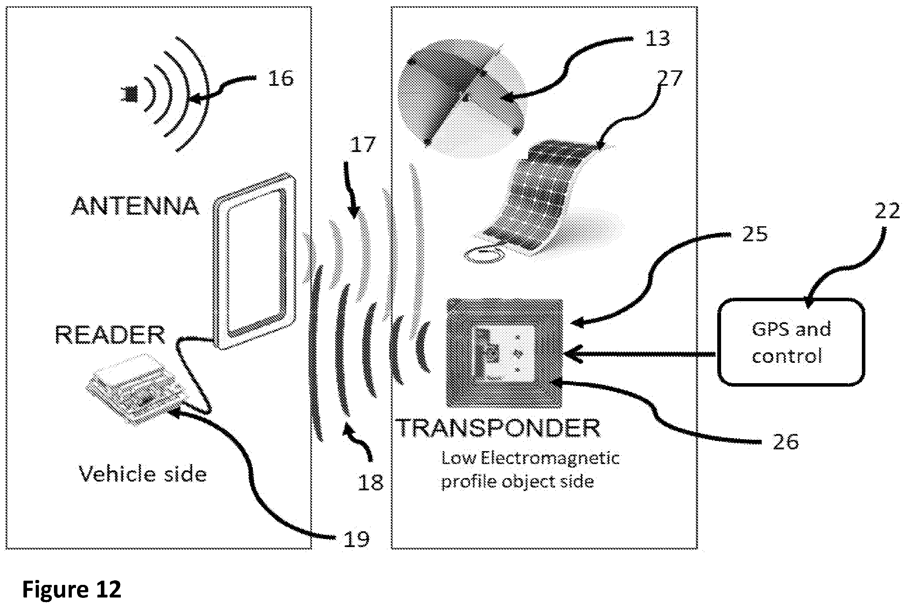

Figure 12 illustrates in diagram form a general structure of a typical system of the present invention. A radar **16** and a reflector **13,** the RFID reader (interrogator) **19,** the interrogation signal **17** and the responded signal **18** coming from the transponder **25** and its antenna **26.** A GPS **22** can also be connected to the RFID tag. The tag is powered by a power source such as a solar cell, a battery, etc. **27.**

Figure 13 illustrates in diagram form an example of typical objects that a vehicle may encounter while navigating; animals like a pig **40**, a bull/cow **41**, a sheep **42**, a doc (a pet) **43**, a horse **44**, humans like school teens **45** a policemen **54** and a child **55** and road side objects like a post **46**, a stop sign **47** (as an example of road-signs), streets elements like a roundabout **48**, a traffic-light for pedestrians **49**, a traffic-light for vehicles **50**, verity of road-signs **51 52 53** (as an example). The reflector and the RFID can be realized in a keychain **56** and be carried on a bag or belt, mounted on a scooter **57** - and the like, and any combination thereof. The reflector **13** and the RFID tag **25** (of any kind) are attached to the objects (shown in the form of a black circle) to increase their visibility, detectability and to provide information to the vehicles.

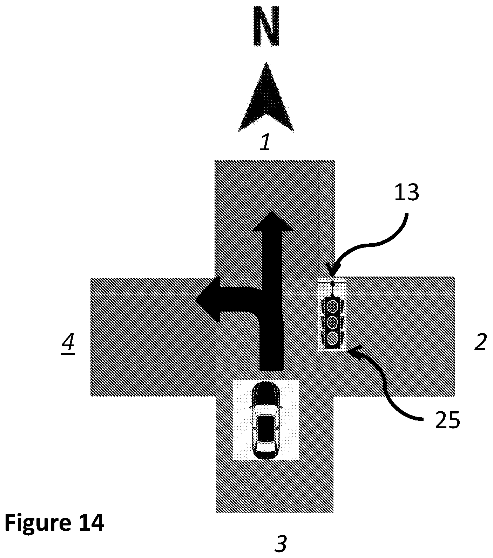

Figure 14 illustrates in diagram form a general structure of a typical setup of the system of the present invention installed in a traffic-light (as described in the example) where the RFID **25** provides information on the present status of the traffic light to vehicles approaching. It his example the information id that the vehicle can only turn to the left (East) or continue straight (north), and the current status is Green (go ahead). In this example, the traffic-light itself is the radar reflector **13** hence it has a sufficient RCS.

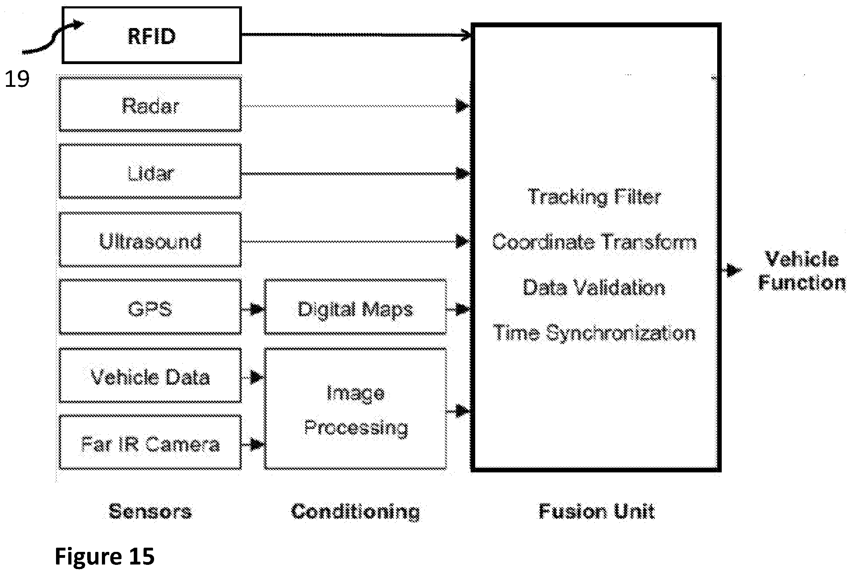

Figure 15 illustrates in diagram form a general structure of a typical setup of the system of the present invention installed in a vehicle control system. An image processing and digital maps are also part of the guidance system a vehicle control system uses. An RFID **19** reader is added to the vehicle's sensors, conditioning and fusion system, which comprises its control system.

The method of the present invention is based on adding an RFID reader to the set of sensors a vehicle is utilizing for semi or full navigation in the rural or urban environments, as well as adding visibility and detectability enhancing devices (e.g., radar reflectors, RFID tags, etc.) to objects found in such environments. The information provided the system is fed to the vehicle fusion and control unit for processing, control and guidance of the vehicle. This vital information is very accurate vs. the information sensors feed the vehicle control systems (with data on the current and developing state of the vehicle's surroundings). Both operation and safety depend on the accuracy of the sensor system. While in the system of the present invention, the information is set up upon installation at the object or updated by the system in real-time. It reduces significantly the error the vehicle control system may have due to the erroneous analysis of the data it picks. The outcome is much safer navigation.

One of the novelties of the present invention is that while current autonomous (and semi-autonomous) cars rely only on their own sensors and processing capabilities, the disclosed systems and methods of the present invention, add assistance to the vehicle's control system, as objects it encounters "identify" themselves, a) by increasing their "visibility" to the vehicle's sensors by increasing their radar cross section and b) by providing vital information about their nature such as what are they; a child, a road sign meaning a right curve ahead, their accurate position, status, and the like.

As shown in Figure 1, a vehicle **47** is equipped with multiple sensors for semi or full autonomous navigation; among those sensors are a) vehicle's radar **16** and b) an RFID reader **19**. Both send electromagnetic signals; the radar **16** for the detection of an object(s) in front of the radar (or on one side of the vehicle) and an RFID reader **19** to interrogate it/them and get as reply information about their type (or nature), position, etc. A bicycle **21,** as an example of an object with a low-electromagnetic profile, and its rider **20** reflects radar pulse back, yet, typically it responds by a very weak response signal to the radar signal **17** (what is also known as low Radar Cross Section). The system of the present invention includes of a reflector **13,** like a corner reflector (see figure 8) and an RFID transponder **25**. The radar signal is bounced back as a much stronger signal **32** (due to the structure of a reflector - see figure 10) **18** and is received at the radar as a big object. The RFID interrogation signal is responded by the RFID tag **25** (either active or passive) and sends back a signal **18** that contains information about the nature (or type) of the object (it is attached to), and optionally its real-time position, hazards that may be relevant to the specific object, serial number, material composition, age, size, weight, height, and any combination thereof, based on an agreed protocol. A block diagram of the system of the present invention is depicted in figure 2, showing the RFID in its passive version. The RFID memory holds the data the RFID tag should respond to interrogation. The transponder **25** holds the electronic circuitry needed to respond to an interrogation from the RFID reader. The antenna **26** transmits the response back to the RFID reader. The RFID is attached to a reflector like a corner reflector. Together the RFID and the radar reflector enhance the visibility of the object to a vehicle and give vital information to the vehicle control system for a saver movement.

The same concept is depicted in figure **3,** but here the RFID is an active tag, having the advantages of longer responds range (usually up to 300 meters) and possible control over the transmitted data and even notify the object (like the bicycle rider) on the approaching vehicle. The transmitted data can be modified by a control unit **23,** and the content of the RFID tag memory **24** can be updated with information about the current position of the object as provided by a GPS unit **22** to the RFID transponder **25** and its antenna **26** and reflector **13.** The system is powered by a power source **27** such as a battery or a solar cell (photovoltaic as an example).

An additional embodiment, an optional configuration the reflector is as part of the antenna for the RFID. The current frequencies allocated for vehicle radars are given in figure 5.

The system of the current invention requires adding an RFID reader **19** to the array of sensors that are connected to the vehicles' sensors-data fusion and control system **15** (as shown in figures 6, 7 and 15).

The system can read multiple objects simultaneously and the objects can respond to multiple interrogations in a very short time and even simultaneously.

An example of a corner radar reflector, a corner reflector **13** principal operation concept **14** is depicted in figure 8 and 9. As shown, it bounces back the incoming signal from most directions, thus giving a very high return signal to the radar. The RFID tag **25** is attached to the reflector **13,** creating together an effective system for enhancing the visibility and detectability of objects with a low-electromagnetic profile, as demonstrated in figure 9.

An example of the system of the present invention as installed on a bicycle is given in figure 11. It can be placed in various places on the bicycle, in a way that it does not interfere with the riding but gives good visibility and detectability in either direction. The system can be either passive or active.

Example of objects that can benefit from the system of the present invention is given in figure 13 and includes; livestock animals, pigs, cows/bulls, sheep, pets, horses, children, road-side posts, traffic light, policeman, children, and the like, of course in any combination.

### Continuously-Programmable RFID

Another embodiment of the present invention is a Continuously-Programmable RFID, where the information on the tag is updated frequently and continuously as the parameters of the object it is attached to changes such as location, speed, etc. Such an RFID tag chip can include:

**(a)** Single memory (where the ID, i.e., its data). The processor writes the new data (like updated GPS coordinate, traffic light status, etc.) as needed, say once every second as an example. During the writing time, which typically takes few microseconds, the tag is not responsive to the reader's, however, the writing time VS. The overall time is very low (i.e., the 'duty-cycle'), thus making the tag responsive in most of the time.
**(b)** A double-buffer memory setup, where two memories serve in an alternating manner, while one is being used to respond to a query by a tag reader, the other memory is updated with the updated data (i.e., in 'writing-mode'). Those memories alternate and swap tasks, leaving one memory, with the most updated data, ready for use all the time.

Both versions allow updating the ID data continuously with real-time information.

Continuously-Programmable RFID tags life-time is virtually almost unlimited. Current memory technologies (like F-Mem) with 10 billion read & write accesses, enable almost unlimited 'write' operations to a tag's memory. It means that one can update the object's position every fraction of seconds. As an example, an object's position can be updated every ten milliseconds (as an example) - an equivalent to less than a foot in traveling distance to a vehicle driving at 100 Km/Hr.) and still have a lifetime of many years.

Another embodiment of the present invention is that it can be implemented on a limited scale if needed (due to budget etc.). As an example, an autonomous vehicle traveling in a fixed and predefined track, like public transportation lanes. Adding the capabilities described in the present invention to a limited number of objects in a limited track simplifies the overall system cost, improves significantly its safety and leave the vehicle's other sensors and radars to focus on only unexpected, spontaneous and unknown events and objects that the vehicle encounters while traveling.

### ANTI-COLLISION PROTOCOLS AND ALGORITHMS

The RFID reader can employ algorithms for anti-collision, which enables the simultaneous reading of multiple RFID tags, for a situation the vehicle may face in a congested traffic and environment with multiple objects.

The anti-collision protocols can be broadly classified into four multiple access protocols.

a) SDMA - In space division multiple access. The channel is divided directionally by using either directional antennas or multiple readers for the identification process. For the spatial separation of the channel, this protocol requires complex antenna design.
b) FDMA In frequency division multiple access. Instead of dedicating the whole channel to a single communication link, the channel is divided into smaller bandwidths. Each frequency region is dedicated to a single tag until the identification is over. This mechanism requires complicated reader functionality to perform successful identifications.
c) CDMA In code division multiple access. The tags are required to multiply their ID with a pseudo-random code before transmitting it to the reader. The reader then decodes the transmitted ID by matching them with a unique code. This system requires intricate functionality on both ends because of the computational work that needs to be done for the successful identification process.
d) TDMA in time division multiple access. The channel bandwidth is divided into time slots which is used by the tags and the reader for the communication process. TDMA protocols forms the largest family of anti-collision protocols for passive RFID systems because of its ease of implementation and reduced complexity. TDMA systems can be further divided into reader-driven systems also known as Reader-talk-first (RTF) and tag driven systems also known as Tag-talk-first (TTF).

Anti-collision algorithms to be mentioned (as an example of) are: ALOHA, framed slotted Aloha (FSA), Dynamic Frame Slotted ALOHA (DFSA), progressing scanning (PS) algorithm, and tree-based protocols as probabilistic and deterministic approaches respectively.

Table no 2 A summary of the tree-based protocols

| Criterion | Query Tree (QT) | Tree Splitting (TS) | Binary Search (BS) | Bitwise Arbitration (BTA) |
|---|---|---|---|---|
| Protocol feature | The reader transmits a query and the tags with prefix matching the query respond. | By splitting collided tags into disjoint subsets, the collisions are resolved here. | The reader sends a serial number to the tags and those with values less than or equal to the serial number reply. | Every tag responds in a bit by bit manner |
| RTF/TTF | Reader driven system | | | |

Table No 3 - A comparison between tree and ALOHA based protocols

| Criterion | Tree protocols | ALOHA protocols |
|---|---|---|
| Protocol feature | These protocols operate by grouping responding tags into subsets and then identifying .ags in each subset sequentially. | These protocols require tags to respond randomly in an asynchronous manner or in synchronous time slots or frames. |
| | | |
| Frequency | Mainly UHF and microwave | LF, HF and UHF |
| Reader to tag commands | High | Low |
| Efficiency versus tag density | Higher efficiency is achievable in high tag density | Lesser efficiency in high tag density |
| Method | Deterministic | Probabilistic |
| Optimum channel utilization | 43% | 18.4% (PA), 36.8% (BFSA) & 37% (DFSA) |
| Reference: Arundhoti Ferdous, "Comparative Analysis of Tag Estimation Algorithms on RFID EPC Gen-2 Performance" Scholar Commons Citation, 2017. | | |

## Examples of the present invention

Fixed positions objects (like roadside elements, roundabout, telephone post, electric-grid posts, road signs, and the like) can be incorporated into the system of the present invention and have their position set up upon installation. A technician programs the RFID tag with the location (coming from a GPS as an example) where he/she placed the road-sign (as an example). The RFID attached to the road-sign will transmit to an interrogator its ID as well as its accurate position. A vehicle applying radar and an RFID reader can get accurate information from those, surrounding objects, identify their nature, and their real-time position by a simple operation. The accurate information is fed to the vehicle control unit that guides the vehicle safely. It eliminates the need for complex processing and/or errors in identifying such objects if one relies only on the vehicle's sensors data, a crucial addition for a vehicle's safe navigation.

**a) An example of a passive RFID installed inside a child's schoolbag, with a radar reflector.**

| | Type of road element | ID number | Height | RCS | Material |
|---|---|---|---|---|---|
| Examples of data within the RFID tag | A pedestrian - child | 0987654321 | small | Low | Human (flesh & blood) |
| **The information is coded to internationally agreed codes (an example of)** | | | | | |
| Example of digital code | 300 | 9720987654321 | 002 | 001 | 001 |

**This tag information means:** It is a small child, with a low RCS, located in Israel with an RFID tag no.

0987654321.

**b) An example of an active RFID installed inside a road-sign that a lane is blocked:**

|  | Type of road element | ID number | Height | RCS | Material | Position | Lane block starts in |
|---|---|---|---|---|---|---|---|
| Examples of data | Road-sign - Closed lane | 098765432 17654321 | 6 feet 2" | Low | Steel | 40.7484 40, - | 100 |
| within the RFID tag |  |  |  |  |  | 73.9845 59 |  |
| Example of digital code | 0987 | 098765432 17654321 | 00602 | 001 | 002 | 40.7484 40, - 73.9845 59 | 100 |

**This tag information means:** It is a road-sign made of steel, which warns that in 100 yards from the position of the road sign the lane is closed.
Due to the active nature of the RFID, the detection range is much longer (usually about 300 meters).

**c) Two examples of an RFID installed on a traffic light with a continuously - programmable RFID (where the data is updated continuously).**

**Example No. 1:**

Objects like traffic-lights that deliver to the driver (nowadays) only information if it can cross the junction ('green-light') or it must stop ('red-light') and the direction it can drive. However, with the system and method of the present invention, as an example, will update the data in its RFID tags with additional information (to be picked up by the vehicles RFID reader) on the traffic-light current status; which lanes can be used ('green-light') in which lanes it has to stop ('red-light'), elapsed time from last change, due time to next change (i.e., switching lanes), and the like.
In a traffic-light as an example, the data transferred by the RFID upon interrogation by the vehicle's RFID reader is the interpretation of the numerical information is in accordance with agreed standard and may differ from one element to the other.(excluding pre-ambles, sync, and other non-data bits); as an example,

| | Type of road element | Traffic-light ID number | GPS coordinate | Junction type | Position at junction | Driving options | Current Status | Elapsed time from the change | Due time to change | Material |
|---|---|---|---|---|---|---|---|---|---|---|
| Examples of data within the RFID tag | Traffic -light | US1234 567890 | 40.7484 40, -73.9845 59 | 4-ways | 2 | 4, 1 | Green | 12" | 28" | Plastic, ferrometal |
| **The information is coded to internationally agreed codes (an example of)** | | | | | | | | | | |
| Example of digital code | 100 | 001123 4567890 | 40.7484 40, -73.984559 | 002 | 2 | 4, 1,0 | 02 | 12 | 28 | 005, 002 |

**This tag information means:** This is a traffic-light located in the United States, position at N40° 44.9064', WO73° 59.0735' (Empire State Building in New York City). It is a 4-way junction; the traffic-light is positioned at the south end of the junction, a vehicle can turn to the left or drive straight (I.e., no right turn allowed). Its current status is Green (means driving is allowed), the green-light is ON for 12 seconds and will be ON in the next 28 seconds. It is made of plastic and ferrometals. (See in Figure 14). The information will be updated every second in the RFID-tag memory and/or upon a change in the traffic light status (green to red as an example).

**Example No. 2:** A bicycle, as an example, the data transferred by the RFID upon interrogation by the vehicle's RFID reader is, as an example.

|  | Type of road element | ID number | GPS coordinates | Speed | Driving direction | RCS | Material | Special warning |
|---|---|---|---|---|---|---|---|---|
| Examples of data | Bicycle | US987654 321 | 40.748440, -73.984559 | 25Km Hr | 270 degrees (vs. the | Low | Carbon fiber | Disabled |
| within the RFID tag |  |  |  |  | north) |  |  |  |
| **The information is coded to internationally agreed codes (an example of)** |  |  |  |  |  |  |  |  |
| Example of digital code | 200 | 001987654 321 | 40.748440, -73.984559 | 25000 | 270 | 001 | 010 | 033 |

**This tag information means:** This is a carbon-fiber made bicycles, with a low Radar Cross Section, driving sped is at 25 kilometers per hour in the direction of 270 degrees from north (i.e., westward), and has special warning as it is for a disabled user. The information about the position of the bicycle and its speed is updated at the tag ten times per second (as an example).

Another embodiment of the disclosed systems and methods of the present invention is it Encryption and cyber-security;

- Encryption and security measure that will guarantee accurate information with no optional access by malicious elements (cyber-attack). It can be added to the RFID tags and be deciphered by the reader and checked for authenticity. The encryption method can be adapted to any version of the RFID tags.
- **Cyber proof characteristic.** Hence it is based on a one-way communication (RFID reader interrogation is not regarded as 'communication'), no cyber attach can affect directly the RFID tag data and change it in any way. Indirect cyber-attack, via the traffic-light computer system, as an example, can and will be prevented by the traffic-light system itself. The RFID tag data is not subject to any direct cyber-attack.

**Additional aspects of the present invention**

a) **ID** - The ID can be a unique ID as MAC (Media Access Control) number is unique in communication of computers systems and is linked to every physical MAC, so can every object be identified by a unique ID.

b) **Cyber protection** - Another embodiment of the disclosed systems and methods of the present invention is it embedded cyber proof characteristic. As a preprogrammed tag, no cyber attach can affect directly the RFID tag data and change it in any way. Indirect cyber-attack, via the traffic-light computer system, (for programmable tags) as an example, can and will be prevented by the traffic-light system itself. The RFID tag data is not subject to any direct cyber-attack.

c) **Parking assistance** - Another embodiment of the disclosed systems and methods of the present invention is as parking assistance where the reflector **13** and the RFID **25** provide information to the parking vehicle on objects next to the requested parking slot.

d) **Internationally agreed RFID protocol(s)** - It is a goal that the international community will adopt a unified protocol (or protocols) that will be used in any RFID attached to low-electromagnetic objects and be accessible and readable by any vehicle in any place around the world.

e) **Non-intelligent vehicles** - The system of the present invention can also be installed on non-intelligent vehicles, even though they are not a road element with the low-electromagnetic profile.

f) **Reducing processing power** - An additional effect of the disclosed systems and methods of the present invention is that vehicles will be able to analyze their surrounding objects more efficiently sparing some of the massive processing power needed to collect, analyze, and interpret data based on sensor's data only thus reducing misinterpretation of the surrounding status significantly. Reducing the processing power and sensor's complexity of vehicle (semi/full autonomous).

g) An additional effect of the disclosed systems and methods of the present invention is that vehicles RFID reader can employ algorithms for anti-collision, which enables the simultaneous reading of multiple RFID tags, for the situation the vehicle may face in congested traffic and an environment with multiple objects.

**Claims**

1.  A method for improving a vehicular navigation control system (15), comprising:

    providing a vehicle (47) having the navigation control system (15) and a radar (16);
    connecting an RFID reader (19) to the vehicle (47) and operatively associated with said navigation control system (15);
    attaching one or more corner reflectors (13) to at least one object (20) having a low radar cross-section, wherein each corner reflector (13) increases the radar cross-section;
    coupling one or more RFID tag (25) to each corner reflector (13), wherein each RFID tag (25) retrievably stores an identification data comprising a nature of the object (20); and
    said nature being irrespective of a position of said object (20),
    wherein the RFID reader (19) is configured to interrogate every RFID tag (25) within an operable range so that the RFID tag (25) discloses the identification data.

2.  The method of claim 1, wherein the one or more RFID tag (25) is passive, powered by the interrogating RFID reader (19).

3.  The method of claim 1, wherein the one or more RFID tag (25) is self-powered.

4.  The method of claim 1, wherein the one or more RFID tag (25) is configured to retrievably store positional data.

5.  The method of claim 4, wherein the one or more RFID tag (25) is continuously programmable so that the positional data is updated a plurality of times per second.

6.  The method of claim 5, wherein the one or more RFID tag (25) provides double buffer memory (24).

7.  The method of claim 1, further comprising an antenna (26) operatively associated with each of the one or more RFID tag (25).

8.  The method of claim 7, further comprising holders securing the antennas (26) and the one or more RFID tag (25) to the corner reflector (13).

9.  The method of claim 1, wherein the RFID reader (19) utilizes anti-collision algorithms enabling simultaneous reading of multiple RFID tags (25), wherein the anti-collision algorithms include protocols requiring multiple RFID tags to respond randomly in an asynchronous manner.

10. A method of creating a vehicular ad-hoc network, the method including the method of claim 1 and further comprising:

    providing a plurality of vehicles (47) incorporating the method for improving a vehicular navigation control system (15) of claim 1; and
    each navigation control system (15) configured to share the identification data of each object (20) with each vehicle (47) in the operable range.

11. The method of claim 10, comprising:
    a traffic module coupled to each navigation control system (15), wherein the traffic module comprises a status of a traffic regulation in the operable range, and

wherein the traffic module is coupled to the identification data of each object (20).

12. The method of claim 1, wherein each RFID tag (25) positioned in a corner of each corner reflector (13).

13. The method of claim 12, wherein each corner reflector (13) is a multidirectional-corner reflector having two or three electrically reflective surfaces, and wherein each RFID tag (25) is positioned adjacent two of the two or three electrically conductive surfaces.

14. The method of claim 1, wherein the RFID reader (19) is configured to interrogate every RFID tag (25) within an operable range so that the RFID tag discloses position data.

15. The method of claim 1, wherein the one or more RFID tag (25) is configured to retrievably store the identification data.

16. The method of claim 1, wherein the one or more RFID tag (25) is continuously programmable so that the position data is updated a plurality of times per second.


**Patentansprüche**

1. Verfahren zur Verbesserung eines Fahrzeug-Navigationssteuerungssystems (15), umfassend:

Bereitstellen eines Fahrzeugs (47) mit dem Navigationssteuerungssystem (15) und einem Radar (16);
Verbinden eines RFID-Lesegeräts (19) mit dem Fahrzeug (47) und operativ mit dem Navigationssteuerungssystem (15);
Anbringen eines oder mehrerer Winkelreflektoren (13) an mindestens einem Objekt (20) mit geringem Radarquerschnitt, wobei jeder Winkelreflektor (13) den Radarquerschnitt vergrößert;
Koppeln eines oder mehrerer RFID-Tags (25) mit jedem Eckreflektor (13), wobei jeder RFID-Tag (25) abrufbar Identifikationsdaten speichert, die die Art des Objekts (20) umfassen; und
wobei die Natur unabhängig von der Position des Objekts (20) ist,
wobei der RFID-Leser (19) so konfiguriert ist, dass er jedes RFID-Tag (25) abfragt innerhalb einer Betriebsreichweite, so dass der RFID-Tag (25) die Identifikationsdaten preisgibt.

2. Verfahren nach Anspruch 1, wobei das eine oder die mehreren RFID-Tags (25) passiv sind und durch das abfragende RFID-Lesegerät (19) mit Strom versorgt werden.

3. Verfahren nach Anspruch 1, wobei das eine oder die mehreren RFID-Tags (25) selbst mit Energie versorgt werden.

4. Verfahren nach Anspruch 1, wobei das eine oder die mehreren RFID-Tags (25) so konfiguriert sind, dass sie Positionsdaten abrufbar speichern.

5. Verfahren nach Anspruch 4, wobei der eine oder die mehreren RFID-Tags (25) kontinuierlich programmierbar sind, so dass die Positionsdaten mehrmals pro Sekunde aktualisiert werden.

6. Verfahren nach Anspruch 5, wobei das eine oder die mehreren RFID-Tags (25) einen doppelten Pufferspeicher (24) bereitstellen.

7. Verfahren nach Anspruch 1, das ferner eine Antenne (26) umfasst, die operativ mit jedem der einen oder mehreren RFID-Tags (25) verbunden ist.

8. Verfahren nach Anspruch 7, das ferner Halter umfasst, die die Antennen (26) und den einen oder die mehreren RFID-Tags (25) am Eckreflektor (13) befestigen.

9. Verfahren nach Anspruch 1, wobei das RFID-Lesegerät (19) Antikollisionsalgorithmen verwendet, die das gleichzeitige Lesen mehrerer RFID-Tags (25) ermöglichen, wobei die Antikollisionsalgorithmen Protokolle umfassen, die erfordern, dass mehrere RFID-Tags zufällig und asynchron reagieren.

10. Ein Verfahren zum Erstellen eines Fahrzeug-Ad-hoc-Netzwerks, wobei das Verfahren das Verfahren nach Anspruch 1 umfasst und weiterhin Folgendes umfasst:

Bereitstellen einer Vielzahl von Fahrzeugen (47), die das Verfahren zur Verbesserung eines Fahrzeugnavigationssteuerungssystems (15) nach Anspruch 1 beinhalten; und

wobei jedes Navigationssteuerungssystem (15) dazu konfiguriert ist, die Identifikationsdaten jedes Objekts (20) mit jedem Fahrzeug (47) im Betriebsbereich zu teilen.

11. Verfahren nach Anspruch 10, umfassend:

ein Verkehrsmodul, das mit jedem Navigationssteuerungssystem (15) gekoppelt ist, wobei das Verkehrsmodul einen Status einer Verkehrsregelung im Betriebsbereich erfasst, und wobei das Verkehrsmodul mit den Identifikationsdaten jedes Objekts (20) gekoppelt ist.

12. Verfahren nach Anspruch 1, wobei jedes RFID-Tag (25) in einer Ecke jedes Eckreflektors (13) positioniert ist.

13. Verfahren nach Anspruch 12, wobei jeder Eckreflektor (13) ein Mehrrichtungs-Eckreflektor mit zwei oder drei elektrisch reflektierenden Oberflächen ist und wobei jedes RFID-Tag (25) neben zwei der zwei oder drei elektrisch leitfähigen Oberflächen positioniert ist.

14. Verfahren nach Anspruch 1, wobei das RFID-Lesegerät (19) so konfiguriert ist, dass es jeden RFID-Tag (25) innerhalb einer Betriebsreichweite abfragt, sodass der RFID-Tag Positionsdaten preisgibt.

15. Verfahren nach Anspruch 1, wobei das eine oder die mehreren RFID-Tags (25) so konfiguriert sind, dass sie die Identifikationsdaten abrufbar speichern.

16. Verfahren nach Anspruch 1, wobei der eine oder die mehreren RFID-Tags (25) kontinuierlich programmierbar sind, sodass die Positionsdaten mehrmals pro Sekunde aktualisiert werden.

**Revendications**

1. Procédé d'amélioration d'un système de contrôle de navigation de véhiculaire (15), comprenant:

fournir un véhicule (47) doté du système de contrôle de navigation (15) et d'un radar (16);

connexion d'un lecteur RFID (19) au véhicule (47) et associé de manière opérationnelle audit système de contrôle de navigation (15);

la fixation d'un ou plusieurs réflecteurs d'angle (13) à au moins un objet (20) ayant une faible section efficace radar, chaque réflecteur d'angle (13) augmentant la section efficace radar;

coupler une ou plusieurs étiquettes RFID (25) à chaque réflecteur d'angle (13), chaque étiquette RFID (25) stockant de manière récupérable des données d'identification comprenant la nature de l'objet (20); et

ladite nature étant indépendante de la position dudit objet (20),

dans lequel le lecteur RFID (19) est configuré pour interroger chaque étiquette RFID (25) dans une plage de fonctionnement afin que l'étiquette RFID (25) divulgue les données d'identification.

2. Procédé selon la revendication 1, dans lequel la ou les étiquettes RFID (25) sont passives, alimentées par le lecteur RFID interrogateur (19).

3. Procédé selon la revendication 1, dans lequel la ou les étiquettes RFID (25) sont autoalimentées.

4. Procédé selon la revendication 1, dans lequel la ou les étiquettes RFID (25) sont configurées pour stocker de manière récupérable des données de position.

5. Procédé selon la revendication 4, dans lequel la ou les étiquettes RFID (25) sont programmables en continu de sorte que les données de position sont mises à jour plusieurs fois par seconde.

6. Procédé selon la revendication 5, dans lequel la ou les étiquettes RFID (25) fournissent une double mémoire tampon (24).

7. Procédé selon la revendication 1, comprenant en outre une antenne (26) associée de manière opérationnelle à chacune des une ou plusieurs étiquettes RFID (25).

8. Procédé selon la revendication 7, comprenant en outre des supports fixant les antennes (26) et la ou les étiquettes RFID (25) au réflecteur d'angle (13).

9. Procédé selon la revendication 1, dans lequel le lecteur RFID (19) utilise des algorithmes anti-collision permettant la lecture simultanée de plusieurs étiquettes RFID (25), les algorithmes anti-collision comprenant des protocoles exigeant que plusieurs étiquettes RFID répondent de manière aléatoire de manière asynchrone.

10. Procédé de création d'un réseau ad hoc véhiculaire, comprenant le procédé selon la revendication 1 et comprenant en outre :

fournir une pluralité de véhicules (47) Integrant le procédé d'amélioration d'un système de contrôle de navigation de véhicule (15) selon la revendication 1; et
chaque système de contrôle de navigation (15) configuré pour partager les données d'identification de chaque objet (20) avec chaque véhicule (47) dans la plage de fonctionnement.

11. Procédé selon la revendication 10, comprenant :

un module de trafic couplé à chaque système de contrôle de navigation (15), dans lequel le module de trafic comprend un état d'une régulation de trafic dans la plage opérationnelle, et
dans lequel le module de trafic est couplé aux données d'identification de chaque objet (20).

12. Procédé selon la revendication 1, dans lequel chaque étiquette RFID (25) est positionnée dans un coin de chaque réflecteur d'angle (13).

13. Procédé selon la revendication 12, dans lequel chaque réflecteur d'angle (13) est un réflecteur d'angle multidirectionnel ayant deux ou trois surfaces électriquement réfléchissantes, et dans lequel chaque étiquette RFID (25) est positionnée adjacente à deux des deux ou trois surfaces électriquement conductrices.

14. Procédé selon la revendication 1, dans lequel le lecteur RFID (19) est configuré pour interroger chaque étiquette RFID (25) dans une plage opérationnelle de sorte que l'étiquette RFID divulgue des données de position.

15. Procédé selon la revendication 1, dans lequel la ou les étiquettes RFID (25) sont configurées pour stocker de manière récupérable les données d'identification.

16. Procédé selon la revendication 1, dans lequel la ou les étiquettes RFID (25) sont programmables en continu de sorte que les données de position sont mises à jour une pluralité de fois par seconde.

Figure 1

**Figure 2**

**Figure 3**

26

Antenna

13

25

RFID transponder

Reflector

24

RFID Memory

23

27

Real-time data update

Control & processing

Power source

60

22

GPS

Figure 4

Figure 6

Figure 7

**Figure 8**

Figure 9a

Figure 9

Figure 10

Figure 11

ANTENNA

16

17

13

27

25

22

READER

GPS and
control

Vehicle side

TRANSPONDER
Low Electromagnetic
profile object side

18

19

26

EP 3 850 395 B1

**Figure 12**

Figure 13

Figure 14

**Figure 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002169533 A1
- US 1234567890 B
- US 987654321 B